# EUROPÄISCHE PATENTANMELDUNG

(11) **EP 1 422 956 A1**
(43) Veröffentlichungstag der Anmeldung: **26.05.2004**
(21) Anmeldenummer: 02026018.8
(22) Anmeldetag: 21.11.2002
(51) Int. Cl.: H04Q 7/30

(54) **Übermittlung von Sprachdaten in einem Mobilfunknetz bestehend aus einem Funkzugangsnetz und einem Vermittlungsnetz**

(71) Anmelder: SIEMENS AKTIENGESELLSCHAFT, 80333 München (DE)
(72) Erfinder: Bachmann, Frank, 10315 Berlin (DE); Baekelandt, Bart, Dr., 9090 Melle (BE); Nedelec, Thierry, 83714 Miesbach (DE); Seitter, Norbert, 82008 Unterhaching (DE)

(57) **Zusammenfassung**

Verfahren und Anordnung zur Übermittlung von Sprachdaten zwischen einem mobilen Benutzerendgerät und einer Gegenstelle über ein Mobilfunknetz, das ein Funknetz und ein Vermittlungsnetz umfasst, wobei die Sprachdaten in Sprachnachrichten über eine Schnittstelle zwischen dem Funknetz und dem Vermittlungsnetz übermittelt werden und zwischen zwei Instanzen wenigstens ein Teil der zu übermittelnden Sprachnachrichten als ein Sprachnachrichtenstrom übermittelt wird, um den Sprachdatenstrom zwischen einer an der Schnittstelle zum Funknetz gelegenen Übermittlungseinrichtung und innerhalb des Vermittlungsnetzes gelegenen weiteren Einrichtungen auf einfache Weise und mit möglichst geringen Verzögerungen zu übermitteln, indem der Sprachnachrichtenstrom zwischen der ersten Instanz und einer zweiten Instanz auf der Übermittlungseinrichtung unverändert weitergeleitet und zwischen der zweiten Instanz und einer weiteren Instanz auf einer weiteren Einrichtung des Vermittlungsnetzes unverändert übermittelt wird.

## Beschreibung

Verfahren und Anordnung zur Übermittlung von Sprachdaten zwischen einem mobilen Benutzerendgerät und einer Gegenstelle über ein Mobilfunknetz, das ein Funknetz und ein Vermittlungsnetz umfasst

Die Erfindung betrifft Verfahren zur Übermittlung von Sprachdaten zwischen einem mobilen Benutzerendgerät und einer Gegenstelle über ein Mobilfunknetz, das ein Funknetz und ein Vermittlungsnetz umfasst, wobei die Sprachdaten in Sprachnachrichten über eine Schnittstelle zwischen dem Funknetz und dem Vermittlungsnetz übermittelt werden und die Sprachnachrichten von Instanzen entsprechend einem Schnittstellenprotokoll erzeugt werden und Sprachdaten von diesen Instanzen aus Sprachnachrichten entsprechend dem Schnittstellenprotokoll zurückgewonnen werden, wobei zwischen jeweils einer Master-Instanz und einer Slave-Instanz wenigstens ein Teil der zu übermittelnden Sprachnachrichten, nämlich ein Sprachnachrichtenstrom, übermittelt wird und ein Sprachnachrichtenstrom zwischen einer ersten Master-Instanz im Funknetz und einer ersten Slave-Instanz auf einer Übermittlungseinrichtung des Vermittlungsnetzes übermittelt wird, sowie entsprechende Anordnungen für Vermittlungsnetze.

In der Festnetz-Telefonie werden Sprachdaten für Sprachübertragungen nach dem ITU-Standard G.711 kodiert und mit einer festen Bandbreite von 64 kbit/s in jede Richtung übertragen.

Für Sprachverbindungen über die Luftschnittstelle zwischen einem mobilen Benutzerendgerät und den Sende- und Empfangseinrichtungen eines Mobilfunknetzes besteht jedoch aufgrund der physikalischen Gegebenheiten die Anforderung, diese mit geringerer Bandbreite zu betreiben. Hierfür existieren Kodierungen, bei denen die Sprachdaten im Vergleich zu einer Bandbreite von 64 kbit/s komprimiert vorliegen. So wird statt des G.711-Codecs z.B. in UMTS der AMR(Adaptive Multi-Rate)-Codec, der mehrere Modi aufweist, oder auch der Wideband-AMR-Codec benutzt. In einem bestimmten Modus erfordert eine Sprachverbindung in eine Richtung beispielsweise Übertragungskapazitäten mit einer Bandbreite von 12.2 kbit/s.

Bei einer Sprachverbindung zwischen zwei Mobilfunkteilnehmern, wenn beispielsweise die Verbindung nur über das Mobilfunknetz ein und desselben Mobilfunkbetreibers verläuft, verständigen sich gewöhnlich die beiden Benutzerendgeräte über einen zu verwendenden Satz von Codec-Modi eines mobilfunk-spezifischen Codec, der dann Ende-zu-Ende genutzt wird, d.h. ohne eine unten weiter erläuterte Transkodierung.

Bei einer Verbindung zwischen einem Mobilfunkteilnehmer und einem Teilnehmer im Festnetz ist jedoch eine Transkodierung erforderlich, bei der die dem Festnetzteilnehmer übermittelten Sprachdaten etwa von einem Modus des AMR-Codecs in den G.711-Codec dekodiert bzw. dekomprimiert werden, und die dem Mobilfunkteilnehmer zu übermittelnden Sprachdaten in umgekehrter Weise kodiert bzw. komprimiert werden.

Eine solche Transkodierung ist auch für bestimmte Services eines Mobilfunknetzes erforderlich, beispielsweise wenn einem Mobilfunkteilnehmer Töne und Ansagen eingespielt werden oder er in einer Konferenzschaltung mit mehreren Teilnehmern verbunden ist.

Die Transkodierung kann im Funknetz eines Mobilfunknetzes durchgeführt werden, wird jedoch meist in oder benachbart zu Vorrichtungen des Vermittlungsnetzes durchgeführt. Hierzu wird der Sprachdatenstrom über eine Transkodierungseinrichtung im Vermittlungsnetz geführt. In der Regel ist es erforderlich, diese Einrichtung für einen verbindungsbezogenen Kodierungs-/Dekodierungsvorgang zu initialisieren, d.h. Informationen, die den verwendeten Codec für die Übermittlung der Sprachdaten über die Luftschnittstelle betreffen, müssen einer auf einen Sprachdatenstrom bezogenen Transkodierungsinstanz auf der Transkodierungseinrichtung mitgeteilt werden. Ändert sich der Codec bzw. Codec-Modus während einer Verbindung, muss der Instanz auch das mitgeteilt werden, d.h. sie muss umkonfiguriert werden. Diese Initialisierungsinformationen (bzw. Umkonfigurierungsinformationen) sind ein Teil des Sprachdatenstroms.

Die Sprachdaten werden zwischen dem mobilen Benutzerendgerät und dem Vermittlungsnetz mittels existierender Datenübertragungsprotokolle in Form von Sprachnachrichten übermittelt. Insbesondere existiert für alle Mobilfunkstandards, die ein Mobilfunknetz in Funknetz und Vermittlungsnetz unterteilen, ein Schnittstellenprotokoll für die Sprachdaten- bzw. Sprachnachrichtenübertragung zwischen dem Funknetz und dem Vermittlungsnetz über eine Schnittstelle zwischen den beiden Netzen. Ein solches Schnittstellenprotokoll kann etwa die Funktionalität eines Rahmungs-Protokolls (Framing Protocol) zum Transport einzelner Sprachnachrichtenströme mit Kennzeichnung, in welchem Codec-Mode dieser Sprachnachrichtenstrom kodiert ist, über dieselbe physikalische Verbindung sowie zur Fehlerbehandlungs- und Flusssteuerung einzelner Ströme aufweisen. Entsprechende Steuerungsinformationen bzgl. Fehlerbehandlung usw. sind dann ebenfalls ein Teil des Sprachnachrichtenstroms.

Für die Erzeugung von Sprachnachrichten entsprechend einem Schnittstellenprotokoll und die Zurückgewinnung von Sprachdaten aus Sprachnachrichten, die entsprechend dem Schnittstellenprotokoll gebildet sind, sind gewöhnlich Protokoll-Instanzen ausgebildet. Dabei existieren für einen Sprachnachrichtenstrom immer mindestens ein Paar von Instanzen, eine Master-Instanz und eine Slave-Instanz, die sich gegenseitig die Sprachnachrichten eines Sprachnachrichtenstromes übermitteln. Allein die Master-Instanz kann einen Sprachnachrichtenstrom initiieren, wie unten genauer erläutert wird.

Die Master-Instanz befindet sich immer im Funknetz. Für die Übermittlung eines Sprachnachrichtenstrom zwischen Funk- und Vermittlungsnetz, d.h. zwischen einer Master- und einer Slave-Instanz, existiert im Vermittlungsnetz gewöhnlich eine Übermittlungseinrichtung, die über eine Einheit verfügt, die zur Implementierung der Slave-Instanz ausgebildet ist.

Sollte für eine Verbindung eine Transkodierung erforderlich sein, müssen die Sprachdaten jedoch zwischen einer verbindungsbezogenen Übermittlungsinstanz der Übermittlungseinrichtung und der entsprechenden Transkodierungsinstanz mittels eines vermittlungsnetz-internen proprietären Protokolls übermittelt werden. Ein solches Protokoll muss für die betroffenen Vorrichtungen des Vermittlungsnetzes konzipiert, implementiert und bei der Weiterentwicklung der Vorrichtungen stets neu angepasst werden. Die Komplexität der Vorrichtungen wird dadurch erhöht. Im Betrieb bedeutet die erforderliche Protokollumsetzung eine größere Sprachverzögerung der betroffenen Verbindungen.

Die Initialisierungsinformationen werden durch die im mobilen Benutzerendgerät vorliegenden Codecs und Codec-Modi bestimmt. Diese Informationen werden daher als Teil des Sprachnachrichtenstromes, und zwar vom Benutzerendgerät an das Funknetz und vom Funknetz an die Übermittlungseinrichtung im Vermittlungsnetz, übermittelt. Für diese Übermittlung der Initialisierungsinformationen werden die existierenden Datenübertragungsprotokolle, insbesondere das für ein konkretes Funknetz und ein konkretes Vermittlungsnetz jeweils vorliegende Schnittstellenprotokoll, genutzt.

Die Initialisierungsinformationen werden wenigstens während des Aufbaus einer Sprachverbindung an das Vermittlungsnetz übermittelt. Sollte eine Transkodierung erforderlich sein, wirken sich die oben angesprochenen Nachteile in Bezug auf die Initialisierungsinformationen speziell so aus, dass aufgrund der Protokollumsetzung die Aufbauzeiten betroffener Verbindungen verlängert werden. Bei einer Codec-Umschaltung während einer Verbindung wird die Umschaltzeit verlängert.

Entsprechende Nachteile ergeben sich ggf. aus der Notwendigkeit, weitere Steuerungsinformationen, etwa bzgl. Fehlerbehandlung und Flusssteuerung, zu übermitteln.

Die vorstehend geschilderten Nachteile ergeben sich ebenso, wenn der Sprachdaten- bzw. -nachrichtenstrom über weitere Übermittlungseinrichtungen und/oder Transkodierungseinrichtungen verläuft.

Die Aufgabe der Erfindung besteht also darin, ein Verfahren und eine Anordnung bereitzustellen, um einen Sprachdatenstrom zwischen einer an der Schnittstelle zum Funknetz gelegenen Übermittlungseinrichtung und innerhalb des Vermittlungsnetzes gelegenen weiteren Einrichtungen auf einfache Weise und mit möglichst geringen Verzögerungen zu übermitteln.

Diese Aufgabe wird durch ein Verfahren mit den Merkmalen des Anspruchs 1 und eine Vorrichtung mit den Merkmalen des Anspruchs 8 gelöst.

Vorgeschlagen wird, den Sprachnachrichtenstrom zwischen der ersten Slave-Instanz und einer zweiten Master-Instanz auf der Übermittlungseinrichtung unverändert weiterzuleiten und zwischen der zweiten Master-Instanz und einer zweiten Slave-Instanz auf einer weiteren Einrichtung des Vermittlungsnetzes unverändert zu übermitteln. Es wird also zur Übermittlung der Sprachdaten zwischen der Übermittlungseinrichtung und weiteren Einrichtungen des Vermittlungsnetzes das herkömmlich zwischen dem Funknetz und dem Vermittlungsnetz verwendete Schnittstellenprotokoll eingesetzt. Hierdurch entfällt die Notwendigkeit zur Konzipierung, Implementierung und Anpassung eines proprietären Protokolls, bzw. proprietärer Protokolle. Dies verringert die Sprachverzögerung bei den betroffenen Verbindungen.

In einer zweckmäßigen Ausführungsform der Erfindung befindet sich eine Transkodierungseinrichtung im Vermittlungsnetz im Sprachnachrichtenstrom, die die durch den Sprachnachrichtenstrom vom Benutzerendgerät übermittelten Sprachdaten dekodiert sowie die durch den Sprachnachrichtenstrom an das Benutzerendgerät zu übermittelnden Sprachdaten kodiert. Die zweite Slave-Instanz liegt auf dieser Transkodierungseinrichtung vor, und der Sprachnachrichtenstrom wird zwischen der zweiten Master-Instanz (auf der Übermittlungseinrichtung) und der zweiten Slave-Instanz auf der Transkodierungseinrichtung unverändert übermittelt.

In einer alternativen zweckmäßigen Ausführungsform der Erfindung liegt die zweite Slave-Instanz auf einer weiteren Übermittlungseinrichtung des Vermittlungsnetzes vor. Hier wird der Sprachnachrichtenstrom zwischen der zweiten Master-Instanz (auf der ersten Übermittlungseinrichtung) und der zweiten Slave-Instanz auf der weiteren Übermittlungseinrichtung des Vermittlungsnetzes unverändert übermittelt.

In weiteren Ausführungsformen der Erfindung liegen weitere Paare von Master- und Slave-Instanzen auf Transkodierungsoder Übermittlungseinrichtungen des Vermittlungsnetzes vor. Der Sprachnachrichtenstrom wird dann zwischen der zweiten bzw. vorhergehenden Slave-Instanz und einer dritten bzw. nachfolgenden Master-Instanz auf der gleichen Transkodierungs- oder Übermittlungseinrichtung unverändert weitergeleitet wird. Der Sprachnachrichtenstrom wird ferner zwischen der dritten bzw. nachfolgenden Master-Instanz und der dritten bzw. nachfolgenden Slave-Instanz auf einer weiteren Transkodierungs- oder Übermittlungseinrichtung des Vermittlungsnetzes unverändert übermittelt.

In diesen Ausführungsformen kommen jeweils die obenerwähnten Vorteile der Verwendung des Schnittstellenprotokolls anstelle eines proprietären Protokolls zur Geltung.

In einer weiteren Ausgestaltung der Erfindung wird zur Initiierung eines Sprachnachrichtenstromes von der ersten Master-Instanz an die erste Slave-Instanz wenigstens eine Initialisierungsnachricht, die entsprechend dem Schnittstellen-Protokoll gebildet ist, übermittelt. In der Initialisierungsnachricht bzw. den Initialisierungsnachrichten sind Initialisierungsinformationen enthalten, die die Kodierung bzw. Dekodierung der nachfolgend zu übermittelnden Sprachdaten betreffen. Die oder jede Initialisierungsnachricht wird mit den unveränderten Initialisierungsinformationen von der ersten bzw. vorhergehenden Slave-Instanz einrichtungsintern an die zweite bzw. nachfolgende Master-Instanz weitergeleitet und von dieser an die zweite bzw. nachfolgende Slave-Instanz übermittelt.

Hiermit entfällt die Notwendigkeit, eigens für die Übermittlung der Initialisierungsinformationen ein vermittlungsnetz-internes proprietäres Protokoll zu konzipieren, zu implementieren und anzupassen. Die Initialisierungsinformationen werden von der Übermittlungseinrichtung ohne weitere Bearbeitung an weitere Transkodierungs- oder Übermittlungseinrichtungen weitergeleitet. Ohne Protokollumsetzung verkürzen sich insbesondere die Aufbauzeiten betroffener Verbindungen. Bei einer Codec-Umschaltung während einer Verbindung verringert sich die Umschaltzeit.

In weiteren Ausgestaltungen der Erfindung werden Steuerungsinformationen zur Steuerung des Sprachnachrichtenstromes in Sprachnachrichten des Sprachnachrichtenstromes übermittelt. Die Steuerungsinformationen können etwa Fehlerbehandlung oder Flusssteuerung des Sprachnachrichtenstromes betreffen. Darüber hinaus können Kodierungsinformationen in Sprachnachrichten des Sprachnachrichtenstromes übermittelt werden, wobei die Kodierungsinformationen die Kodierung der in einer bestimmten Sprachnachricht enthaltenen Sprachdaten betreffen. Durch die Übermittlung der Steuer- und/oder Kodierungsinformationen kommen jeweils die obenerwähnten Vorteile der Verwendung des Schnittstellenprotokolls anstelle jeweils eines proprietären Protokolls zur Geltung.

In einer bevorzugten Ausführung ist die Schnittstelle zwischen dem Funknetz und dem Vermittlungsnetz die UMTS Iu-Schnittstelle und als Schnittstellenprotokoll wird für die Übermittlung des Sprachnachrichtenstromes innerhalb des Vermittlungsnetzes das UMTS UP-Protokoll der Iu-Schnittstelle benutzt. In einer beispielhaften Ausgestaltung dieser Ausführung ist das Funknetz bspw. ein GERAN(GSM Edge Radio Access Network)-System, das im sogenannten Iu-Mode an ein Vermittlungsnetz der 3. Generation gekoppelt ist.

Insbesondere sind die obenerwähnten Instanzen auf Instanz-Implementierungseinheiten implementiert, die zur Erzeugung von Sprachnachrichten, die Sprachdaten enthalten, entsprechend einem Schnittstellenprotokoll und zur Rückgewinnung von Sprachdaten aus Sprachnachrichten entsprechend dem Schnittstellenprotokoll ausgebildet sind. Jeweils ein Einheitenpaar einer Masterinstanz-Implementierungseinheit und einer Slaveinstanz-Implementierungseinheit ist zur gegenseitigen Übermittlung von Sprachnachrichten eines Sprachnachrichtenstromes vorgesehen. Hierbei ist die oder jede Masterinstanz-Implementierungseinheit zur Initiierung von Sprachnachrichtenströmen ausgebildet.

Eine herkömmliche Übermittlungseinrichtung weist eine Slaveinstanz-Implementierungseinheit eines ersten Einheitenpaares auf (deren zugeordnete Masterinstanz-Implementierungseinheit sich auf einer Einrichtung des Funknetzes befindet). Eine erfindungsgemäße Übermittlungseinrichtung weist eine Masterinstanz-Implementierungseinheit eines zweiten Einheitenpaares auf. Die Slaveinstanz- sowie die Masterinstanz-Implementierungseinheit der erfindungsgemäßen Übermittlungseinrichtung sind zur unveränderten Weiterleitung eines Sprachnachrichtenstrom untereinander, d.h. einrichtungsintern, ausgebildet.

Die Masterinstanz-Implementierungseinheit der Übermittlungseinrichtung ist erfindungsgemäß zur unveränderten Übermittlung des Sprachnachrichtenstromes an die Slaveinstanz-Implementierungseinheit des zweiten Einheitenpaares auf einer weiteren Übermittlungseinrichtung oder einer Transkodierungseinrichtung des Vermittlungsnetzes ausgebildet.

In einer Ausgestaltung einer erfindungsgemäßen Transkodierungseinrichtung weist diesen neben der soeben erwähnten Slaveinstanz-Implementierungseinheit des zweiten Einheitenpaares eine Masterinstanz-Implementierungseinheit eines weiteren Einheitenpaares auf. Die Slaveinstanz- sowie die Masterinstanz-Implementierungseinheit der Transkodierungseinrichtung sind zur unveränderten Weiterleitung des Sprachnachrichtenstrom untereinander, d.h. einrichtungsintern, ausgebildet.

Die Masterinstanz-Implementierungseinheit der Transkodierungseinrichtung ist zur unveränderten Übermittlung des Sprachnachrichtenstromes an die Slaveinstanz-Implementierungseinheit des weiteren Einheitenpaares auf einer weiteren Einrichtung des Vermittlungsnetzes ausgebildet.

In einer erfindungsgemäßen Anordnung ist bei gleichzeitigem Vorliegen einer Slaveinstanz- und einer Masterinstanz-Implementierungseinheit in einer Einrichtung des Vermittlungsnetzes diese Slaveinstanz-Implementierungseinheit zur einrichtungsinternen Weiterleitung empfangener Initialisierungsnachrichten mit den unveränderten Initialisierungsinformationen an diese Masterinstanz-Implementierungseinheit ausgebildet ist. Ferner ist diese Masterinstanz-Implementierungseinheit zur Initiierung eines Sprachdatenstromes entsprechend der weitergeleiteten Initialisierungsinformationen ausgebildet.

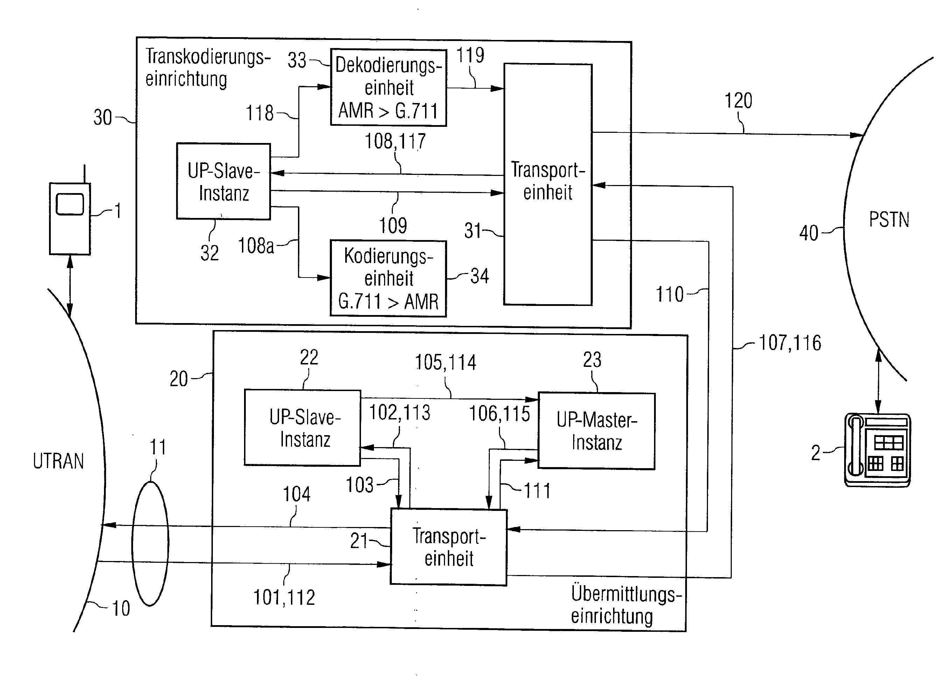

Weitere Vorteile und Zweckmäßigkeiten der Erfindung ergeben sich aus der nachfolgenden Beschreibung eines bevorzugten Ausführungsbeispieles anhand der einzigen Figur. Diese zeigt ein funktionales Blockschaltbild einer Übermittlungseinrichtung und einer Transkodierungseinrichtung.

Beide Einrichtungen sind Teil eines nicht genauer dargestellten Vermittlungsnetzes, welches wiederum Teil eines Mobilfunknetzes nach dem UMTS(Universal Mobile Telecommunications Systems)-Standard ist. Das Vermittlungsnetz ist für CS(Circuit Switched)-Services ausgelegt, bei denen die Übermittlung von Sprachdaten pro Verbindung mit fester oder variabler, jedenfalls aber garantierter Bandbreite erfolgt.

Von einem mobilen Benutzerendgerät 1 wird eine Sprachverbindung zu einem Festnetztelefon 2 aufgebaut. Die Verbindung verläuft über ein UMTS-Funknetz (UMTS Radio Access Network, UTRAN) 10, das Vermittlungsnetz, von dem die Übermittlungseinrichtung 20 und die Transkodierungseinrichtung 30 gezeigt sind, und ein Festnetz 40.

Im Festnetz 40 liegen die Sprachdaten für diese Verbindung nach dem ITU-T Standard G.711 kodiert vor. Sie werden mit einer festen Bandbreite von 64 kbit/s übertragen. Für die Übertragung über die Luftschnittstelle zwischen dem Benutzerendgerät 1 und den Sende- und Empfangseinrichtungen des Funknetzes 10 werden die Sprachdaten komprimiert. Statt des G.711- Codecs wird ein Modus des AMR-Codecs benutzt, der eine Bandbreite von 12.2 kbit/s erfordert. Die Sprachdaten werden hierzu in der Transkodierungseinrichtung 30 entweder zur Übermittlung über die Luftschnittstelle vom G.711-Codec in den AMR-Codec (um-)kodiert oder zur Übermittlung in das Festnetz 40 von dem benutzten AMR-Codec in den G.711-Codec dekodiert.

Die kodierten Sprachdaten werden in Sprachnachrichten zwischen dem Funknetz 10 und dem Vermittlungsnetz, insbesondere der Übermittlungseinrichtung 20, über die UMTS Iu-Schnittstelle 11 übertragen. Der Transport von Daten über die Schnittstelle kann mittels verschiedener Transporttechnologien erfolgen, hier wird die ATM(Asynchronous Transfer Mode)-Technologie genutzt. Zur zeitkontinuierlichen Übermittlung von Sprachdaten mit variabler, aber garantierter Bandbreite wird als Transportprotokoll insbesondere das AAL2(ATM Adaptation Layer 2)-Protokoll genutzt.

Die Sprachdaten werden jedoch nicht direkt in AAL2-Datenübertragungsblöcke eingefügt, sondern es existiert eine übergeordnete Protokollschicht für die Übertragung von Sprachdaten, nämlich das UMTS UP(User Plane)-Protokoll der Iu-Schnittstelle nach dem 3GPP-Standard 25.415. Die Übertragung von Sprachdaten in Sprachnachrichten, die nach dem UP-Protokoll gebildet sind, dient der Entkopplung von Funk- und Vermittlungsnetz, damit ein und dasselbe Funknetz mit verschiedenen Vermittlungsnetzen ("Circuit Switched" oder "Packet Switched") kommunizieren kann, sowie der Unabhängigkeit von den darunter liegenden Transportprotokollen. Dieses Schnittstellenprotokoll ist ein Rahmungs-Protokoll (Framing Protocol) zum Transport einzelner Sprachnachrichtenströme mit Kennzeichnung, in welchem Codec-Mode dieser Sprachnachrichtenstrom kodiert ist, über dieselbe physikalische Verbindung, sowie zur Fehlerbehandlungs- und Flusssteuerung einzelner Ströme.

Innerhalb des Vermittlungsnetzes, insbesondere zwischen der Übermittlungseinrichtung 20 und der Transkodierungseinrichtung 30, wird ebenfalls die ATM-Technologie genutzt, jedoch werden die Sprachdaten nicht mittels AAL2 sondern mit Hilfe eines anderen Transportprotokolls übermittelt. Die Übermittlungseinrichtung 20 setzt daher in einer Transporteinheit 21 Nachrichten, insbesondere Sprachnachrichten, zwischen AAL2 und dem vermittlungsnetz-internen Transportprotokoll um.

Für die Übermittlung von nach dem UP-Protokoll gebildeten Sprachnachrichten über die Iu-Schnittstelle 11 ist ein Initialisierungsvorgang erforderlich, durch den Initialisierungsinformationen für eine Verbindung festgelegt werden. Die Informationen betreffen einen Satz von Codecs, bzw. Codec-Modi für AMR, sowie ferner für jeden dieser Codecs, bzw. Codec-Modi, einen Index, der während der Dauer der Verbindung eindeutig diesen Codec bzw. Codec-Modus kennzeichnet. In jeder der nachfolgend übermittelten Sprachnachrichten befindet sich neben den Sprachdaten ein Index zur Kennzeichnung des Codecs bzw. Codec-Modus, der für die in dieser Nachricht übermittelten Sprachdaten verwendet wird.

In Bezug auf eine Sprachverbindung befindet sich für die Übermittlung von nach dem UP-Protokoll gebildeten Sprachnachrichten über die Iu-Schnittstelle 11 im Funknetz 10 und im Vermittlungsnetz, hier insbesondere in der Übermittlungseinheit 20, jeweils eine UP-Protokoll-Instanz. Jede Instanz deckt den vollen Funktionsumfang des UP-Protokolls nach dem 3GPP-Standard 25.415 ab, jedoch ist eine der beiden Instanzen eine übergeordnete (Master-)Instanz, die allein zur Einleitung eines Initialisierungsvorganges ausgebildet ist.

Die Protokoll-Instanz im Funknetz ist die Master-Instanz für alle Verbindungen über die Iu-Schnittstelle 11. Die entsprechend untergeordnete (Slave-)Instanz, die für die beispielhaft betrachtete Verbindung im Vermittlungsnetz benötigt wird, liegt in der Übermittlungseinrichtung 20 als UP-Slave-Instanz 22 vor.

Der Initialisierungsvorgang über die Iu-Schnittstelle 11 wird von der UP-Master-Instanz im Funknetz 10 in Schritt 101 durch die Sendung einer Initialisierungsnachricht an die Transporteinheit 21 in der Übermittlungseinrichtung 20 eingeleitet. Die Transporteinheit 21 entnimmt die mittels dem AAL2-Protokoll übertragene, nach dem UP-Protokoll gebildete Initialisierungsnachricht und übermittelt diese in Schritt 102 an die UP-Slave-Instanz 22 in der Übermittlungseinrichtung 20. Diese speichert die Initialisierungsinformationen.

Die UP-Slave-Instanz 22 quittiert ausserdem den Empfang der Initialisierungsnachricht in Schritt 103 mit einer Bestätigungsnachricht, die an die UP-Master-Instanz im Funknetz 10 gerichtet ist. Die Transporteinheit 21 überträgt die Bestätigungsnachricht in Schritt 104 über die Iu-Schnittstelle.

Für die Sprachverbindung zwischen dem Vermittlungsnetz und dem Festnetz 40 ist eine Transkodierung der Sprachdaten erforderlich. Es muss also die Transkodierungseinrichtung 30 in den Sprachnachrichtenstrom eingefügt werden. Es ist ferner erforderlich, der Transkodierungseinrichtung 30 die zu verwendenden Codecs mitzuteilen.

In der Übermittlungseinrichtung 20 wird hierfür eine UP-Master-Instanz 23 eingerichtet. Die UP-Master-Instanz 23 empfängt in Schritt 105 von der UP-Slave-Instanz 22 die in Schritt 102 erhaltenen Initialisierungsinformationen. Die UP-Master-Instanz 23 erzeugt eine Initialisierungsnachricht nach dem UP-Protokoll, die die übermittelten Initialisierungsinformationen enthält, und übergibt diese Nachricht in Schritt 106 an die Transporteinheit 21. Von dieser wird die Initialisierungsnachricht mittels des vermittlungsnetz-internen Transportprotokolls in Schritt 107 an die Transkodierungseinrichtung 30 übermittelt.

Die Transporteinheit 31 der Transkodierungseinrichtung 30 empfängt die Initialisierungsnachricht und übergibt diese in Schritt 108 an eine UP-Slave-Instanz 32. Diese speichert den übermittelten Codec-Satz sowie die zugewiesenen Indices. Die UP-Slave-Instanz 32 quittiert den Empfang der Initialisierungsnachricht in Schritt 109 mit einer Bestätigungsnachricht, die an die UP-Master-Instanz 23 gerichtet ist. Die Transporteinheit 31 überträgt die Bestätigungsnachricht in Schritt 110 an die Transporteinheit 21, die die Bestätigung in Schritt 111 an die UP-Master-Instanz 23 übergibt.

Eine Sprachnachricht, die Sprachdaten enthält, die vom Benutzerendgerät 1 stammen, wird in einem Schritt 112 vom Funknetz 10 über die Iu-Schnittstelle 11 an die Übermittlungseinrichtung 20 übertragen. Die Transporteinheit 21 entnimmt die mittels des Transportprotokolls AAL2 transportierte und entsprechend dem UP-Protokoll gebildete Sprachnachricht und übergibt diese in Schritt 113 an die UP-Slave-Instanz 22. Eine Verarbeitung der Sprachdaten durch die UP-Slave-Instanz 22 erfolgt nicht, sondern diese reicht die Sprachdaten sowie den zugehörigen Index in Schritt 114 unverändert an die UP-Master-Instanz 23 weiter, die diese in eine Sprachnachricht nach dem UP-Protokoll einbringt. Diese Nachricht wird in Schritt 115 an die Transporteinheit 21 zur weiteren Übermittlung übergeben. Die Transporteinheit 21 übermittelt diese Nachricht in Schritt 116 an die Transkodierungseinrichtung 30.

Die Transporteinheit 31 der Transkodierungseinrichtung 30 entnimmt die Sprachnachricht und leitet sie in Schritt 117 an die UP-Slave-Instanz 32 weiter. Diese entnimmt die Sprachdaten aus der Sprachnachricht, ermittelt aus dem Index mithilfe der gespeicherten Initialisierungsinformationen den verwendeten Codec und übergibt die Sprachdaten sowie eine Kennzeichnung des verwendeten Codecs der Dekodiereinheit 33 in Schritt 118. Diese dekodiert die Sprachdaten, d.h. die Daten werden von dem verwendeten AMR Modus nach G.711 umkodiert. Die dekodierten Sprachdaten werden an die Transporteinheit übergeben, die die Sprachdaten entsprechend der für das Festnetz 40 verwendeten TDM(Time Division Multiplex)-Transporttechnik an das Festnetz 40 weiterleitet, von wo die Sprachdaten schließlich an das Festnetztelefon 2 übermittelt werden.

In umgekehrter Richtung werden aus dem Festnetz 40 an die Transkodierungseinrichtung 30 übermittelte Sprachdaten von der Transporteinheit 31 an die Kodierungseinheit 34 übergeben. Diese kodiert die Sprachdaten, d.h. die Daten werden von dem G.711-Codec in den verwendeten AMR-Modus umkodiert. Der verwendete Modus ist der Kodierungseinheit 34 von der UP-Slave-Instanz 32 vorher, beispielsweise während der Initialisierung in einem Schritt 108a unmittelbar nach dem Schritt 108, übermittelt worden. Der weitere Verlauf der Verarbeitung und Übermittlung der Sprachdaten erfolgt genau nach dem bisher geschilderten Verfahren, jedoch in umgekehrter Richtung; insbesondere werden nach dem UP-Protokoll gebildete Sprachnachrichten von der UP-Slave-Instanz 32 bzw. 22 an die jeweilige UP-Master-Instanz 23 bzw. über die Iu-Schnittstelle gesendet.

In diesem Ausführungsbeispiel wurde die erfindungsgemäße Übermittlung von Sprachdaten zwischen einer Übermittlungseinrichtung und einer Transkodierungseinrichtung eines Vermittlungsnetzes beispielhaft dargestellt. Jedoch kann das erfindungsgemäße Verfahren ebenso zwischen zwei Übermittlungseinrichtungen oder zwischen zwei Transkodierungseinrichtungen des Vermittlungsnetzes zur Anwendung kommen. Weiterhin kann der Sprachnachrichtenstrom über eine Mehrzahl von Paaren von Master- und Slave-Instanzen über eine Mehrzahl von Einrichtungen des Vermittlungsnetzes übermittelt werden.

Die Erfindung ist nicht auf diese Ausführungsbeispiele beschränkt, sondern ebenso in einer Vielzahl von Abwandlungen möglich, die im Rahmen fachgemäßen Handelns liegen.

Zum Beispiel liegt dem geschilderten Ausführungsbeispiel ein Mobilfunknetz nach dem UMTS-Standard zugrunde. Jedoch sind offenkundig andere Ausführungsformen denkbar, die beispielsweise auf der Verwendung eines GERAN(GSM Edge Radio Access Network)-Systems basieren, das im sogenannten Iu-Mode ein Vermittlungsnetz der 3. Generation nutzt.

## Patentansprüche

**1.** Verfahren zur Übermittlung von Sprachdaten zwischen einem mobilen Benutzerendgerät und einer Gegenstelle über ein Mobilfunknetz, das ein Funknetz und ein Vermittlungsnetz umfasst, wobei
die Sprachdaten in Sprachnachrichten über eine Schnittstelle zwischen dem Funknetz und dem Vermittlungsnetz übermittelt werden,
die Sprachnachrichten von Instanzen entsprechend einem Schnittstellenprotokoll erzeugt und Sprachdaten von diesen Instanzen aus Sprachnachrichten entsprechend dem Schnittstellenprotokoll zurückgewonnen werden,
zwischen jeweils einer Master-Instanz und einer Slave-Instanz wenigstens ein Teil der zu übermittelnden Sprachnachrichten, nämlich ein Sprachnachrichtenstrom, übermittelt wird,
ein Sprachnachrichtenstrom zwischen einer ersten Master-Instanz im Funknetz und einer ersten Slave-Instanz auf einer Übermittlungseinrichtung des Vermittlungsnetzes übermittelt wird,
**dadurch gekennzeichnet, dass**
der Sprachnachrichtenstrom zwischen der ersten Slave-Instanz und einer zweiten Master-Instanz auf der Übermittlungseinrichtung unverändert weitergeleitet und zwischen der zweiten Master-Instanz und einer zweiten Slave-Instanz auf einer weiteren Einrichtung des Vermittlungsnetzes unverändert übermittelt wird.

**1.** Verfahren nach Anspruch 1,
**dadurch gekennzeichnet, dass**
eine Transkodierungseinrichtung im Vermittlungsnetz die durch den Sprachnachrichtenstrom vom Benutzerendgerät übermittelten Sprachdaten dekodiert sowie die durch den Sprachnachrichtenstrom an das Benutzerendgerät zu übermittelnden Sprachdaten kodiert und
der Sprachnachrichtenstrom zwischen der zweiten Master-Instanz und der zweiten Slave-Instanz auf der Transkodierungseinrichtung unverändert übermittelt wird.

**3.** Verfahren nach Anspruch 1,
**dadurch gekennzeichnet, dass**
der Sprachnachrichtenstrom zwischen der zweiten Master-Instanz und der zweiten Slave-Instanz auf einer weiteren Übermittlungseinrichtung des Vermittlungsnetzes unverändert übermittelt wird.

**4.** Verfahren nach Anspruch 2 oder 3,
**dadurch gekennzeichnet, dass**
der Sprachnachrichtenstrom zwischen der zweiten bzw. vorhergehenden Slave-Instanz und einer dritten bzw. nachfolgenden Master-Instanz auf der gleichen Transkodierungs- oder Übermittlungseinrichtung unverändert weitergeleitet wird und
der Sprachnachrichtenstrom zwischen der dritten bzw. nachfolgenden Master-Instanz und der dritten bzw. nachfolgenden Slave-Instanz auf einer weiteren Transkodier- oder Übermittlungseinrichtung des Vermittlungsnetzes unverändert übermittelt wird.

**5.** Verfahren nach einem der Ansprüche 1 bis 4,
**dadurch gekennzeichnet, dass**
zur Initiierung eines Sprachnachrichtenstromes von der ersten Master-Instanz an die erste Slave-Instanz wenigstens eine Initialisierungsnachricht, die entsprechend dem Schnittstellen-Protokoll gebildet ist, übermittelt wird,
in der Initialisierungsnachricht bzw. den Initialisierungsnachrichten Initialisierungsinformationen enthalten sind, die die Kodierung bzw. Dekodierung der nachfolgend zu übermittelnden Sprachdaten betreffen, und
die oder jede Initialisierungsnachricht mit den unveränderten Initialisierungsinformationen von der ersten bzw. vorhergehenden Slave-Instanz einrichtungsintern an die zweite bzw. nachfolgende Master-Instanz weitergeleitet wird und von dieser an die zweite bzw. nachfolgende Slave-Instanz übermittelt wird.

**6.** Verfahren nach einem der vorhergehenden Ansprüche,
**dadurch gekennzeichnet, dass**
Steuerungsinformationen zur Steuerung des Sprachnachrichtenstromes in Sprachnachrichten des Sprachnachrichtenstromes übermittelt werden und Kodierungsinformationen in Sprachnachrichten des Sprachnachrichtenstromes übermittelt werden und die Kodierungsinformationen die Kodierung der in einer bestimmten Sprachnachricht enthaltenen Sprachdaten betreffen.

**7.** Verfahren nach einem der vorhergehenden Ansprüche,
**dadurch gekennzeichnet, dass**
als Schnittstelle zwischen dem Funknetz und dem Vermittlungsnetz die UMTS Iu-Schnittstelle
und als Schnittstellenprotokoll das UMTS UP-Protokoll der Iu-Schnittstelle benutzt wird.

**8.** Anordnung für Mobilfunk-Vermittlungsnetze zur Durchführung eines Verfahrens nach einem der vorhergehenden Ansprüche, wobei Instanz-Implementierungseinheiten zur Erzeugung von Sprachnachrichten, die Sprachdaten enthalten, entsprechend einem Schnittstellenprotokoll und zur Rückgewinnung von Sprachdaten aus Sprachnachrichten entsprechend dem Schnittstellenprotokoll ausgebildet sind und
jeweils ein Einheitenpaar einer Masterinstanz-Implementierungseinheit und einer Slave-Instanz-Implementierungseinheit zur gegenseitigen Übermittlung von Sprachnachrichten eines Sprachnachrichtenstromes vorgesehen sind und
die oder jede Masterinstanz-Implementierungseinheit zur Initiierung von Sprachnachrichtenströmen ausgebildet ist, mit einer Übermittlungseinrichtung, die eine Slave-Instanz-Implementierungseinheit eines ersten Einheitenpaares aufweist,
**dadurch gekennzeichnet, dass**
die Übermittlungseinrichtung eine Masterinstanz-Implementierungseinheit eines zweiten Einheitenpaares aufweist und die Slave-Instanz- sowie die Masterinstanz-Implementierungseinheit der Übermittlungseinrichtung zur unveränderten Weiterleitung eines Sprachnachrichtenstrom untereinander ausgebildet sind und
die Masterinstanz-Implementierungseinheit zur unveränderten Übermittlung des Sprachnachrichtenstromes an die Slave-Instanz-Implementierungseinheit des zweiten Einheitenpaares auf einer weiteren Übermittlungseinrichtung oder einer Transkodierungseinrichtung des Vermittlungsnetzes ausgebildet ist.

**9.** Anordnung nach Anspruch 8,
**dadurch gekennzeichnet, dass**
die Transkodierungseinrichtung neben der Slave-Instanz-Implementierungseinheit des zweiten Einheitenpaares eine Masterinstanz-Implementierungseinheit eines weiteren Einheitenpaares aufweist und die Slave-Instanz- sowie die Masterinstanz-Implementierungseinheit der Transkodierungseinrichtung zur unveränderten Weiterleitung des Sprachnachrichtenstrom untereinander ausgebildet sind und
die Masterinstanz-Implementierungseinheit zur unveränderten Übermittlung des Sprachnachrichtenstromes an die Slave-Instanz-Implementierungseinheit des weiteren Einheitenpaares auf einer weiteren Einrichtung des Vermittlungsnetzes ausgebildet ist.

**10.** Anordnung nach Anspruch 8 oder 9,
**dadurch gekennzeichnet, dass**
bei gleichzeitigem Vorliegen einer Slave-Iinstanz- und einer Masterinstanz-Implementierungseinheit in einer Einrichtung des Vermittlungsnetzes diese Slave-Instanz-Implementierungseinheit zur einrichtungsinternen Weiterleitung empfangener Initialisierungsnachrichten mit den unveränderten Initialisierungsinformationen an diese Masterinstanz-Implementierungseinheit ausgebildet ist und diese Masterinstanz-Implementierungseinheit zur Initiierung eines Sprachdatenstromes entsprechend der weitergeleiteten Initialisierungsinformationen ausgebildet ist.
